# EUROPEAN PATENT APPLICATION

(11) **EP 1 583 213 A1**
(43) Date of publication of application: **05.10.2005**
(21) Application number: 05251882.6
(22) Date of filing: 24.03.2005
(51) Int. Cl.: H02N 1/00

(54) **Electrostatic actuator drive**

(30) Priority: 31.03.2004 JP 2004107337
(71) Applicant: KABUSHIKI KAISHA TOSHIBA, Tokyo 105-8001 (JP)
(72) Inventor: Yoshida, Mitsunobu, c/o Toshiba Corporation, Tokyo 105-8001 (JP)
(74) Representative: Granleese, Rhian Jane

(57) **Abstract**

A signal output device includes a timing waveform generation device (22) which outputs each signal from a plurality of output terminals, and an output port exchange device (23) which is connected to the timing waveform generation device (22), the output port exchange device (23) having output ports (24a-24h) which output the signals inputted from the timing waveform generation device (22), the output port exchange device (23) performing conversion of a correspondence relationship between the output terminals and the output ports based on a predetermined exchange rule.

## Description

The present invention relates to a signal output device which outputs a waveform signal for controlling a control object device, particularly to the signal output device which can decrease a component mounting area of a mounting substrate when the signal output device is connected to the control object device mounted on the mounting substrate.

The signal output device which outputs a waveform output signal for driving an electrostatic actuator is well known (for example, see Jpn. Pat. Appln. KOKAI Publication No. 08-140367).

In wiring pattern design of the substrate which connects the signal output device for outputting plural waveform output signals and the control object device controlled by plural waveform inputs, an optimum arrangement is determined in consideration of many constraints such as mechanical interference with other devices, electrical interference such as EMI, the component mounting area, an arrangement of other mounting components, and a pin layout of each mounting component.

In the above signal output device, there are problems described below. It is not always possible that the ideal arrangement is realized between the pin arrangements of the signal output device and the control object device.

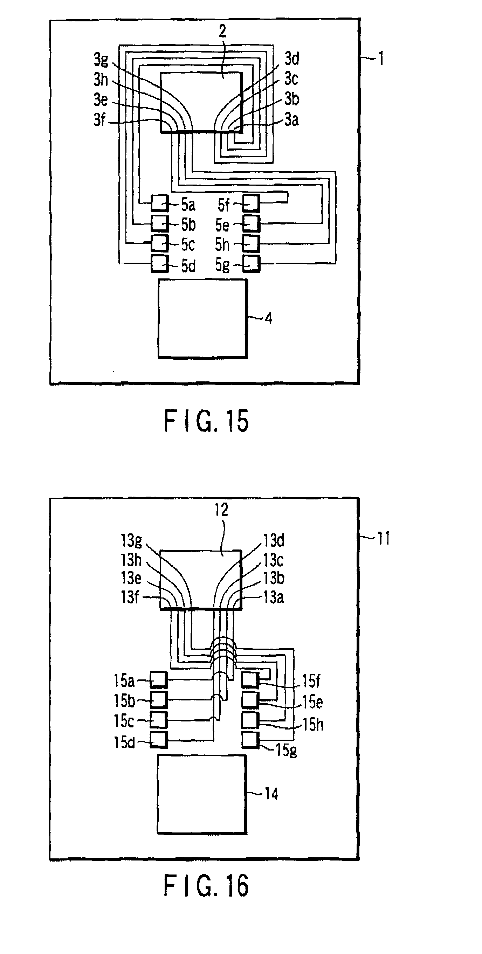

FIG. 15 is a plan view showing a substrate 1 for the electrostatic actuator. A control IC (signal output device) 2 is mounted on the substrate 1. Terminals 3a to 3h are provided in the control IC 2. An actuator mechanism (control object element) 4 is mounted on the substrate 1. Further, pads 5a to 5h and a wiring pattern 6 are formed on the substrate 1. The pads 5a to 5h are used for the connection to the actuator mechanism 4. The wiring pattern 6 connects the terminals 3a to 3h and the pads 5a to 5h. Although a single-layer substrate can be used as the substrate 1, because a length of the wiring pattern 6 is lengthened, there is the problem that the component mounting area is enlarged.

FIG. 16 is a plan view showing a substrate 11 for the electrostatic actuator. A control IC 12 is mounted on the substrate 11. Terminals 13a to 13h are provided in the control IC 12. An actuator mechanism 14 is mounted on the substrate 11. Further, pads 15a to 15h and a wiring pattern 16 are formed on the substrate 11. The pads 15a to 15h are used for the connection to the actuator mechanism 14. The wiring pattern 16 connects the terminals 13a to 13h and the pads 15a to 15h. A multi-layer substrate is used as the substrate 11, and lines are crossed in the wiring pattern 16. Therefore, in the multi-layer substrate, although the increase in component mounting area can be suppressed, the substrate cost is increased as the number of layers is increased, which causes the increase in mounting cost. Further, a substrate thickness is increased as the number of layers is increased, which results in the problem that a substrate volume is increased.

In order to solve the pin arrangement problem, it is thought that the arrangement of output pins is mechanically changed in the control IC. However, there is the problem that development cost is increased, because it is necessary to produce a chip (package) again.

In the wiring pattern design of the substrate which connects the signal output device and the control object device, an object of the invention is to decrease the development cost while the wiring length can be shortened or the component mounting area can be decreased.

In order to solve the above-described problem and achieve the object, according to embodiments of the present invention, there is provided a signal output device comprising: a signal output device comprising: a timing waveform generation device which outputs each signal from a plurality of output terminals; and an output port exchange device which is connected to the timing waveform generation device, the output port exchange device having output ports which output the signals inputted from the timing waveform generation device, the output port exchange device performing conversion of a correspondence relationship between the output terminals and the output ports based on a predetermined exchange rule.

Further, according to embodiments of the present invention, there is provided a signal output device comprising: a substrate; a timing waveform generation device which is provided on the substrate, the timing waveform generation device outputting each signal from a plurality of output terminals; an output port exchange device which is provided on the substrate and is connected to the timing waveform generation device, the output port exchange device having output ports which output the signals inputted from the timing waveform generation device, the output port exchange device performing conversion of a correspondence relationship between the output terminals and the output ports based on a predetermined exchange rule; an element mounting unit which is provided on the substrate, the element mounting unit having a electric conduction portion which is used for connection to a control object element controlled by the output of the timing waveform generation device; and a wiring pattern which connects the output ports and the element mounting unit.

Further, according to embodiments of the present invention, there is provided a signal output device comprising: a timing waveform generation device which is provided on a first substrate and which outputs a signal from each of a plurality of output terminals; an output port exchange device which is provided on a second substrate and is connected to the timing waveform generation device, the output port exchange device having output ports which output the signals inputted from the timing waveform generation device, the output port exchange device performing conversion of a correspondence relationship between the output terminals and the output ports based on a predetermined exchange rule; an element mounting unit which is provided on the first substrate or the second substrate, the element mounting unit having a electric conduction portion which is used for connection to a control object element controlled by the output of the timing waveform generation device; and a wiring pattern which connects the output ports and the element mounting unit.

According to embodiments of the present invention, in the wiring pattern design of the substrate which connects the signal output device and the control object device, the development cost can be reduced while the wiring length can be shortened or the component mounting area can be decreased.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a plan view showing a substrate on which a control circuit and electrostatic actuator according to a first embodiment of the invention are mounted;
FIG. 2 is a block diagram showing a connecting relation between the control circuit and the electrostatic actuator which are mounted on the substrate;
FIG. 3 is a block diagram showing a configuration of the control circuit;
FIG. 4 is a plan view showing an upper stator electrode substrate of the electrostatic actuator mounted on the substrate;
FIG. 5 is a plan view showing a lower stator electrode substrate of the electrostatic actuator mounted on the substrate;
FIG. 6 is an explanatory view showing a flexible cable;
FIG. 7 is an explanatory view showing a flexible cable;
FIG. 8 is an explanatory view showing a mutual relationship of pieces of input data to an output port exchange device incorporated into the control circuit;
FIG. 9 is an explanatory view showing a func_onehot block data string in the input data;
FIG. 10 is a block diagram showing a configuration of the output port exchange device;
FIG. 11 is a plan view showing an example of the substrate in which the output port exchange device is applied to an LED drive device;
FIG. 12 is a plan view showing another example of the substrate in which the output port exchange device is applied to the LED drive device;
FIG. 13 is a plan view showing an example of the substrate in which the output port exchange device is applied to another electrostatic actuator;
FIG. 14 is a block diagram showing a configuration of a control circuit according to a second embodiment of the invention;
FIG. 15 is a plan view showing an example of the substrate on which the control circuit and the electrostatic actuator are mounted; and
FIG. 16 is a plan view showing another example of the substrate on which the control circuit and the electrostatic actuator are mounted.

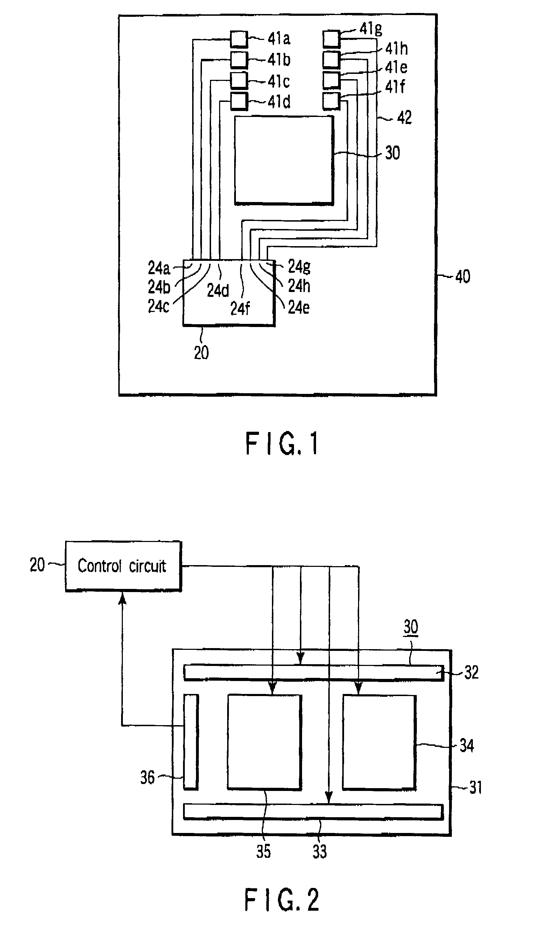

FIG. 1 is a plan view showing a substrate 40, on which a control circuit (signal output device) 20 according to a first embodiment of the invention and an electrostatic actuator (electromechanical transducer element) 30 are mounted. FIG. 2 is a block diagram showing connection between the control circuit 20 and the electrostatic actuator 30.

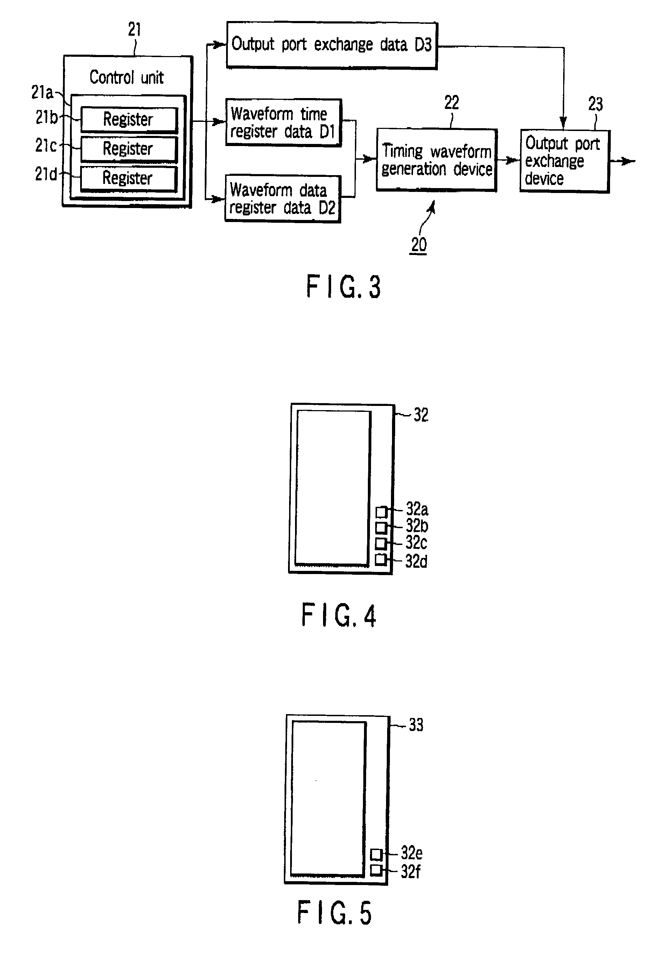

As shown in FIG. 3, the control circuit 20 includes a control unit 21, a timing waveform generation device 22, an output port exchange device 23, a voltage boost device (not shown), and a switching device (not shown). The timing waveform generation device 22 and the output port exchange device 23 constitute the signal output device.

The control unit 21 includes a register 21a. The register 21a includes registers 21b-21d. The control unit 21 outputs waveform time register data D1, waveform data register data D2, and output port exchange data.

The waveform time register data D1 and the waveform data register data D2 are inputted to the timing waveform generation device 22, and the output port exchange data D3 is inputted to the output port exchange device 23. Output data of the output port exchange device 23 is formed in a 12-bit data string, and each bit outputs Low or High voltage. The voltage is about 2.5V in the High state, and the High voltage is sufficiently small relative to the drive voltage of the electrostatic actuator 30. For example, the drive voltage of the electrostatic actuator 30 is 100V. The voltage boost device is the device which generates the drive voltage of the electrostatic actuator 30 and is connected to the switching circuit. When each bit of the output port exchange device 23 is in the High state, the switching circuit outputs the drive voltage. The output of the switching circuit becomes the output to the electrostatic actuator 30.

The timing waveform generation device 22 outputs a time-series timing waveform along values of the waveform time register and the waveform data register, and the timing waveform is inputted to the output port exchange device 23. The output port exchange device 23 exchanges output terminals based on an exchange rule determined by the output port exchange data D3 as mentioned later, and a predetermined waveform is outputted. Since the details of the timing waveform generation device 22 is disclosed in United States Patent appln. No. 10/950,449, the detailed description will not be repeated here.

As shown in FIG. 2, the electrostatic actuator 30 includes a stator frame 31, an upper stator electrode substrate 32, and a lower stator electrode substrate 33. The upper stator electrode substrate 32 is attached to the stator frame 31, and four sets of stripe electrodes are formed in the upper stator electrode substrate 32. Two sets of lower electrodes are formed in the lower stator electrode substrate 33. Moving elements 34 and 35 and an image pickup element 36 are provided between the upper stator electrode substrate 32 and the lower stator electrode substrate 33. The moving elements 34 and 35 are reciprocally guided by the stator electrode substrates 32 and 33.

As shown in FIG. 4, in the upper stator electrode substrate 32, electrode pads 32a to 32d are provided in each output waveform port. The predetermined drive voltage can be applied to the stripe electrode by applying the drive waveform to the electrode pads 32a to 32d. The electrode pads 32a to 32d are arranged in the order shown in FIG. 4.

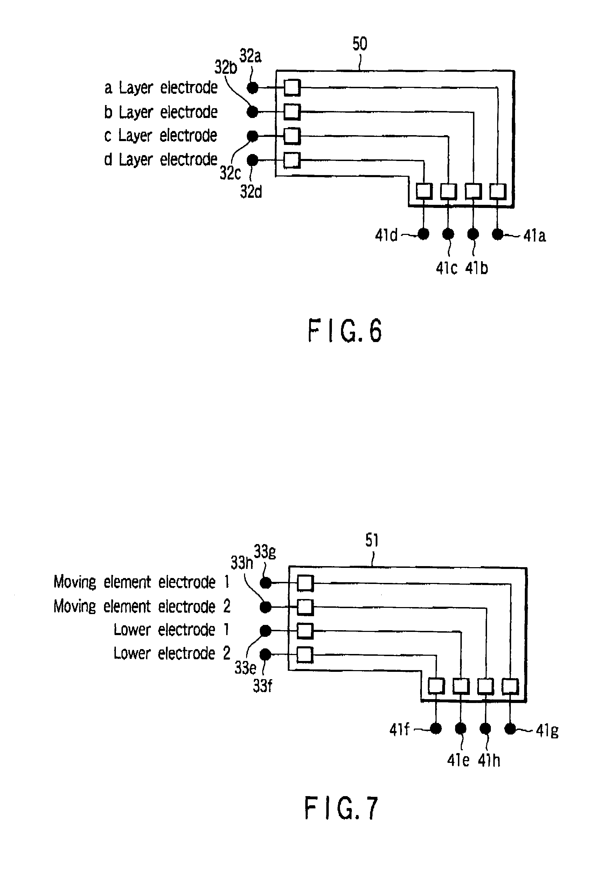

As shown in FIG. 5, electrode pads 33e to 33h are provided in the lower stator electrode substrate 33. The electrode pads 33e and 33f are connected to the lower electrode. The electrode pad 33g is connected to the moving element electrode of the moving element 34. The electrode pad 33h is connected to the moving element electrode of the moving element 35. Drive force is imparted to the moving element by applying the drive waveform to the electrode pads 33e to 33h. The electrode pads 33e to 33h are arranged in the order shown in FIG. 5.

Substrate electrode pads 41a to 41h are formed in the substrate 40. The substrate electrode pads 41a to 41h are connected to output terminals 24a to 24h in the output port exchange device 23 of the control circuit 20 through wiring 42.

FIGS. 6 and 7 show flexible cables 50 and 51 which connect the groups of electrode pads. The substrate electrode pads 41a to 41d are connected to the electrode pads 32a to 32d through the flexible cable 50. The substrate electrode pads 41e to 41h are connected to the electrode pads 32e to 32h through the flexible cable 51. Lines in the flexible cables 50 and 51 are maintained in parallel to one another without crossing one another.

The control circuit 20 configured as above drives the electrostatic actuator 30 as follows. The control unit 21 outputs the waveform time register data D1, the waveform data register data D2, and the output port exchange data D3. The waveform time register data D1 and the waveform data register data D2 is inputted to the timing waveform generation device 22. The timing waveform generation device 22 outputs the time-series timing waveform along the values of the waveform time register and the waveform data register, and the timing waveform is inputted to the output port exchange device 23. The output data is formed in the 12-bit data string which can be stored in the register, and each bit is related to each of the 12-channel output port.

The output port exchange device 23 exchanges the output terminals based on the exchange rule determined by the output port exchange data D3, and the predetermined waveform is outputted. The output port exchange data D3 is the value stored in the register, and a bit shift amount concerning each output port is stored. The output port exchange device 23 receives the bit shift amount concerning each output port from the output port exchange data D3 to perform a shift operation to each bit of the data. Finally the output port exchange device 23 performs an OR operation of all the bits. The operation result becomes the output of the output port exchange device 23.

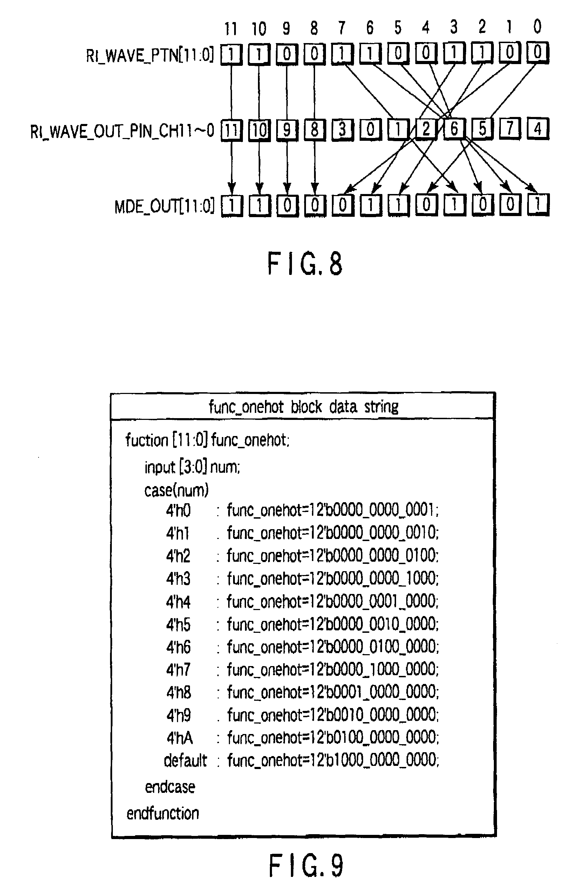

FIG. 8 shows 12-bit RI_WAVE_RTN data which is of the input to the output port exchange device 23, RI_WAVE_OUT_PIN_CH0 to RI_WAVE_OUT_PIN_CH11 which are of 4-bit output port exchange data D3 in each channel, and 12-bit MDE_OUT data which is of the output from the output port exchange device 23.

For example, RI_WAVE_OUT_PIN_CH0 assigns RI_WAVE_PTN[0] for which bit of MDE_OUT. Similarly RI_WAVE_OUT_PIN_CH11 assigns RI_WAVE_PTN[11]. Specifically the assignments are performed as follows.
RI_WAVE_OUT_PIN_CH0=4
RI_WAVE_OUT_PIN_CH1=7
RI_WAVE_OUT_PIN_CH2=5
RI_WAVE_OUT_PIN_CH3=6
RI_WAVE_OUT_PIN_CH4=2
RI_WAVE_OUT_PIN_CH5=1
RI_WAVE_OUT_PIN_CH6=0
RI_WAVE_OUT_PIN_CH7=3
RI_WAVE_OUT_PIN_CH8=8
RI_WAVE_OUT_PIN_CH9=9
RI_WAVE_OUT_PIN_CH10=10
RI_WAVE_OUT_PIN_CH11=11

In the case where the assignments are performed in the above manner, the output port becomes 0xC69 when the input to the output port exchange device 23 is 0xCCC. The lower-order eight bits are connected to channels a to h respectively.

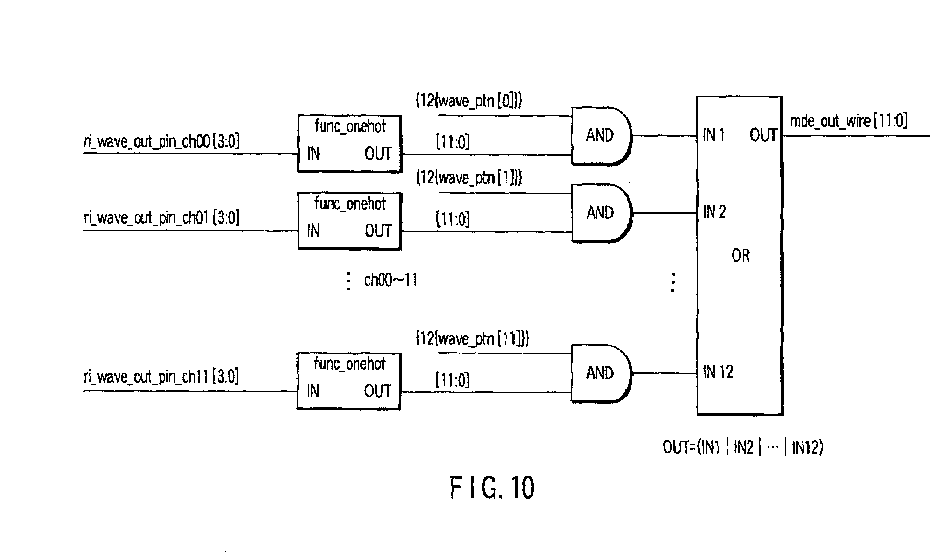

FIG. 10 is a block diagram showing the configuration of the inside of the output port exchange device 23. RI_MAVE_OUT_PIN_CH0 data to RI_WAVE_OUT_PIN_CH11 data which are of the 4-bit output port exchange data D3 in each channel are connected to ri_wave_out_pin_ch00 to ri_wave_out_pin_ch11 signals. Each signal is converted into the 12-bit data string by a func_onehot block. The data generates the bit string, in which only the bit of the output port exchange data D3 value of each channel is 1 and the remainders of the bits are 0.

FIG. 9 is an explanatory view showing an example in which the func_onehot block is described by a Verilog HDL language. The output bit string of the func_onehot block is converted into the mde_out_wire signal by an AND operation and the OR operation. The AND operation is performed by the output bit string and the each bit of a wave_ptn signal connected to the RI_WAVE_PTN data. The OR operation is performed by all the operation results of the AND operations. The mde_out_wire signal is connected to the MDE_OUT data and outputted from the output port.

According to the control circuit 20 configured as above, in the output data outputted from the timing waveform generation device 22, the output position can be changed by the output port exchange device 23. Therefore, the layout of the wiring 42 on the substrate 40 can be designed so that the component mounting area is decreased, which contributes to the miniaturization. It is not necessary that the control circuit 20 is improved, so that the development cost can also be reduced.

It is possible that the output port exchange data D3 is inputted from the outside, or it is possible that the output port exchange data D3 is previously stored in a memory in the output port exchange device 23. The output port exchange data D3 stored in the memory is determine in advance.

Not only are the output terminals exchanged based on one kind of output port exchange data D3, but the plural pieces of output port exchange data D3 stored in the memory in the output port exchange device 23 may be used by the switching. It is also possible that the output port exchange data D3 is used by switching the data to the data newly inputted externally. Further, it is possible that the pieces of output port exchange data D3 are changed while the control circuit 20 is in action. According to the above configuration, when the pieces of output port exchange data D3 are changed at an arbitrary time, the output ports can immediately be changed. Therefore, the complicated output port management such as the dynamic output port change can be performed.

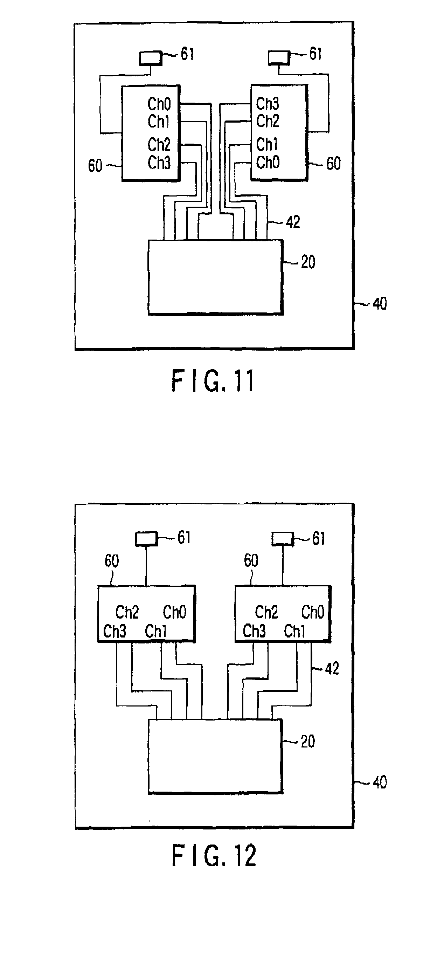

FIGS. 11 and 12 are a plan view showing a state in which LED drivers 60 and LEDs 61 are mounted on the substrate 40 instead of the electrostatic actuator 30. In the case of the use of the element to be controlled other than the electrostatic actuator 30, the output data to each of channels CH0 to CH3 is exchanged based on the output port exchange data D3. Therefore, as with the case of the electrostatic actuator 30 mounted on the substrate 40, the wiring 42 can be simplified and the component mounting area can be reduced.

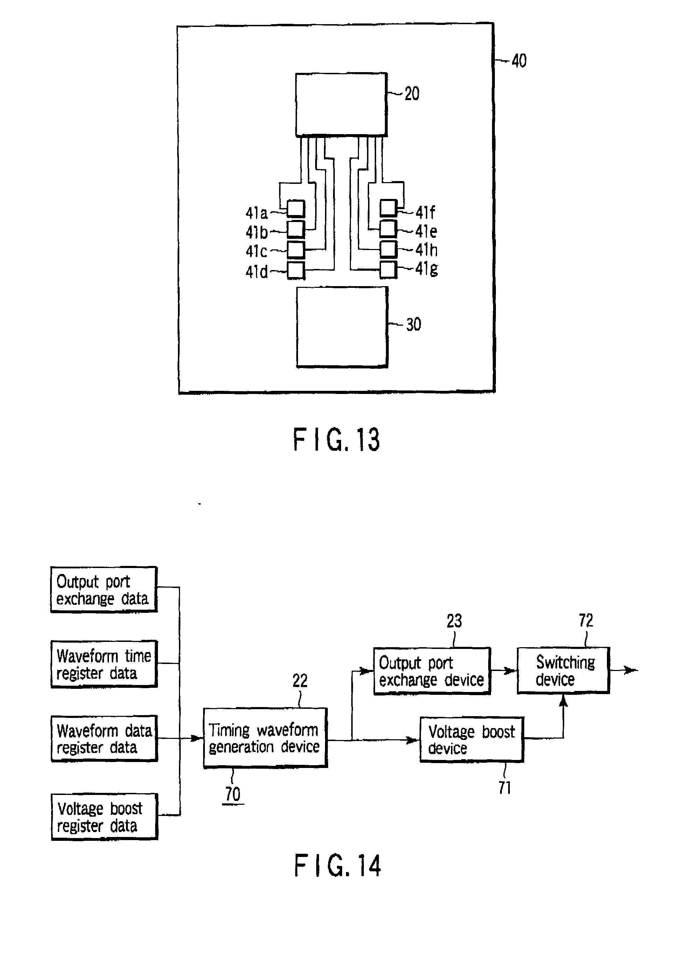

FIG. 13 is a plan view showing an example of the configurations of the substrate 40. The same effect as the substrate 40 shown in FIG. 1 can be obtained in the substrate 40 shown in FIG. 13.

FIG. 14 is a block diagram showing a configuration of a control circuit 70 according to a second embodiment of the invention. In FIG. 14, the same functional component as FIG. 2 is indicated by the same numeral, and the detail description is not repeated here. The control circuit 70 includes the timing waveform generation device 22, the output port exchange device 23, a voltage boost device 71, and a switching device 72. The output port exchange data D3, the waveform time register data D1, the waveform data register data D2, and voltage boost ratio register data are inputted to the timing waveform generation device 22. The output port exchange data D3, the waveform time register data D1, and the waveform data register data D2 are inputted to the output port exchange device 23. The voltage boost ratio register data is inputted to the voltage boost device 71. The outputs of the output port exchange device 23 and the voltage boost device 71 are connected to the switching device 72.

Among pieces of data outputted from the timing waveform generation device 22, the value of the voltage boost ratio register data is inputted to the voltage boost device 71. The voltage boost device 71 generates the drive voltage according to the voltage boost ratio register data. For example, in the case where the output voltage of the timing waveform generation device 22 is 2.5V in the High state while the voltage boost ratio register data is 10, the voltage boost device 71 generates 25V as the drive voltage of the electrostatic actuator. The drive voltage is provided to the electrostatic actuator by the switching device 72.

The control circuit 70 according to the second embodiment of the invention enables the output port exchange data D3, the waveform data register data D2, and the voltage boost ratio register data in the time series manner only during an interval specified by the waveform time register data D1. Therefore, a voltage boost ratio and output port exchange data D3 can be changed in time series. Thus, in the control circuit 70, while the assignment of the output port can be changed in time series by the output port exchange device 23, the voltage boost ratio can be changed in time series by the voltage boost device 71. Therefore, more complicated port management can be realized.

The wiring is outputted from each port of the control circuit. The wiring layout can be done at the shortest path without causing interference. In the control circuit, the mounting can be performed with a single-layer substrate only by seeing the wiring of the actuator.

## Claims

1. A signal output device **characterized by** comprising:
a timing waveform generation device (22) which outputs signals from a plurality of output terminals; and
an output port exchange device (23) which is connected to the timing waveform generation device (22), the output port exchange device (23) having output ports (24a-24h) which output the signals inputted from the timing waveform generation device (22), the output port exchange device (23) performing conversion of a correspondence relationship between the output terminals and the output ports (24a-24h) based on a predetermined exchange rule.

2. A signal output device according to claim 1, **characterized in that** the exchange rule is determined by output port exchange data (D3) which determines an output shift amount.

3. A signal output device according to claim 2, **characterized in that** the output port exchange data (D3) is inputted from the outside.

4. A signal output device according to claim 2, **characterized in that** the output port exchange data (D3) is stored in an output port exchange data storage unit which is provided in the output port exchange device (23).

5. A signal output device according to claim 4, **characterized in that** the plurality of pieces of output port exchange data (D3) are stored in the output port exchange data storage unit, and any one of the plurality of stored pieces of output port exchange data (D3) is used.

6. A signal output device according to claim 5, **characterized in that** any ane of the plurality of pieces of output port exchange data (D3) used can be switched.

7. A signal output device according to claim 2, **characterized in that** the output port exchange data (D3) can be changed to the output port exchange data (D3) newly inputted externally.

8. A signal output device according to claim 2, **characterized in that** the output port exchange data (D3) is determined in advance.

9. A substrate device **characterized by** comprising:
a substrate (40);
a timing waveform generation device (22) which is provided on the substrate (40), the timing waveform generation device (22) outputting each signal from a plurality of output terminals;
an output port exchange device (23) which is provided on the substrate (40) and is connected to the timing waveform generation device (22), the output port exchange device (23) having output ports (24a-24h) which output the signals inputted from the timing waveform generation device (22), the output port exchange device (23) performing conversion of a correspondence relationship between the output terminals and the output ports (24a-24h) based on a predetermined exchange rule;
an element mounting unit which is provided on the substrate (40), the element mounting unit having a electric conduction portion (41a-41h) which is used for connection to a control object element (30) controlled by the output of the timing waveform generation device (22); and
a wiring pattern (42) which connects the output ports (24a-24h) and the element mounting unit.

10. A substrate device according to claim 9, **characterized in that** the exchange rule is determined by output port exchange data (D3) which determines an output shift amount.

11. A substrate device according to claim 10, **characterized in that** the output port exchange data (D3) is inputted from the outside.

12. A substrate device according to claim 10, **characterized in that** the output port exchange data (D3) is stored in an output port exchange data storage unit which is provided in the output port exchange device (23) .

13. A signal output device according to claim 12, **characterized in that** the plurality of pieces of output port exchange data (D3) are stored in the output port exchange data storage unit, and any one of the plurality of stored pieces of output port exchange data (D3) is used.

14. A signal output device according to claim 13, **characterized in that** any one of the plurality of pieces of output port exchange data (D3) used can be switched.

15. A signal output device according to claim 10, **characterized in that** the output port exchange data (D3) can be changed to the output port exchange data (D3) newly inputted externally.

16. A substrate device **characterized by** comprising:
a timing waveform generation device (22) which is provided on a first substrate and which outputs a signal from each of a plurality of output terminals;
an output port exchange device (23) which is provided on a second substrate and is connected to the timing waveform generation device (22), the output port exchange device (23) having output ports (24a-24h) which output the signals inputted from the timing waveform generation device (22), the output port exchange device (23) performing conversion of a correspondence relationship between the output terminals and the output ports (24a-24h) based on a predetermined exchange rule;
an element mounting unit which is provided on the first substrate or the second substrate, the element mounting unit having a electric conduction portion (41a-41h) which is used for connection to a control object element (30) controlled by the output of the timing waveform generation device (22); and
a wiring pattern which connects the output ports (24a-24h) and the element mounting unit.
